# EUROPÄISCHE PATENTSCHRIFT

(11) **EP 2 008 487 B1**
(45) Veröffentlichungstag und Bekanntmachung des Hinweises auf die Patenterteilung: **30.10.2013**
(21) Anmeldenummer: 07726836.5
(22) Anmeldetag: 13.03.2007
(51) Int. Cl.: H04W 72/08, H04L 1/00

(54) **ENDGERÄT, BASISSTATION UND MEHRBENUTZER-FUNKSYSTEM UND VERFAHREN ZUM BETREIBEN DES ENDGERÄTS UND DER BASISSTATION DES MEHRBENUTZER-FUNKSYSTEMS**
TERMINAL, BASE STATION, MULTI-USER RADIO SYSTEM AND METHOD FOR OPERATING A TERMINAL AND THE BASE STATION OF THE MULTI-USER RADIO SYSTEM
TERMINAL, STATION DE BASE ET SYSTÈME DE RADIOCOMMUNICATION MULTI-UTILISATEUR ET PROCÉDÉ POUR FAIRE FONCTIONNER LE TERMINAL ET LA STATION DE BASE DU SYSTÈME DE RADIOCOMMUNICATION MULTI-UTILISATEUR

(30) Priorität: 21.03.2006 DE 102006012978
(43) Veröffentlichungstag der Anmeldung: 31.12.2008
(73) Patentinhaber: Hewlett-Packard Development Company, L.P., Houston, TX 77707 (US)
(72) Erfinder: OBERMANNS, Sebastian, 45478 Mühlheim (DE); SCHMIDT, Malte, 90537 Feucht (DE); SCHWARK, Uwe, 28832 Achim (DE)
(74) Vertreter: Samson & Partner
(86) Internationale Anmeldenummer: PCT/EP2007/052330
(87) Internationale Veröffentlichungsnummer: WO 2007/107476

(56) Entgegenhaltungen:
- US-A1- 2006 019 672
- TAIWEN TANG, ROBERT W. HEATH JR.: "Opportunistic Feedback for Downlink Multiuser Diversity" IEEE COMMUNICATION LETTERS, [Online] Bd. 9, Nr. 10, Oktober 2005 (2005-10), Seiten 948-950, XP002442335 Gefunden im Internet: URL:http://ieeexplore.ieee.org/iel5/4234/3 2466/0151567> [gefunden am 2007-07-12]
- ZHONG-HAI HAN ET AL: "Opportunistic scheduling with partial channel information in OFDMA/FDD systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26. September 2004 (2004-09-26), Seiten 511-514, XP010788428 ISBN: 0-7803-8521-7
- GESBERT D ET AL: "How much feedback is multi-user diversity really worth?", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 1, 20 June 2004 (2004-06-20), pages 234-238, XP010709995, DOI: 10.1109/ICC.2004.1312486 ISBN: 978-0-7803-8533-7
- JOHANSSON M: "Benefits of multiuser diversity with limited feedback", SIGNAL PROCESSING ADVANCES IN WIRELESS COMMUNICATIONS, 2003. SPAWC 200 3. 4TH IEEE WORKSHOP ON ROME, ITALY 15-18 JUNE 2003, PISCATAWAY, NJ, USA,IEEE, US, 15 June 2003 (2003-06-15), pages 155-159, XP010713393, DOI: 10.1109/SPAWC.2003.1318941 ISBN: 978-0-7803-7858-2

## Beschreibung

Die Erfindung betrifft ein Mehrbenutzer-Funksystem und ein Verfahren und ein entsprechendes Endgerät des Mehrbenutzer-Funksystems sowie ein Verfahren und eine entsprechende Basisstation des Mehrbenutzer-Funksystems, das insbesondere ein Mobilfunksystem ist.

Im Zuge der Weiterentwicklung von UMTS und im Zuge der Entwicklung einer vierten Mobilfunkgeneration soll die Leistungsfähigkeit und die spektrale Effizienz für eine Datenübertragung im Vergleich zu bekannten Mobilfunksystemen gesteigert werden. Diese Steigerung soll insbesondere durch Nutzen von adaptiven Techniken erreicht werden. Dazu werden Übertragungsparameter an eine aktuell vorherrschende Empfangssituation oder Kanalqualität angepasst. Die Übertragungsparameter umfassen beispielsweise eine Koderate, ein für die Übertragung genutztes Modulationsverfahren oder eine Art einer räumlichen Verarbeitung, z.B. räumliches Multiplexing oder Beamforming. Dieses Anpassen von Übertragungsparametern an die aktuell vorherrschende Empfangssituation oder Kanalqualität wird auch als "Link Adaption" bezeichnet.

Eine weitere Möglichkeit der Anpassung besteht bei Mehrbenutzer-Funksystemen darin, diejenigen Nutzer, d.h. Endgeräte, auszuwählen, die aktuell eine besonders gute Kanalqualität aufweisen, und diesen Ressourcen für die Datenübertragung bevorzugt zuzuweisen. Diese Art der Zuweisung von Ressourcen wird auch als "Opportunistic Scheduling" bezeichnet. Dadurch kann ein Summendurchsatz in einer Zelle des Mehrbenutzer-Funksystems vergrößert werden. Dazu muss jedoch die Empfangssituation oder Kanalqualität an den jeweiligen Aufenthaltsorten der Nutzer bzw. der Endgeräte bekannt sein.

Der Artikel von T. Tang, R.W. Heath, "Opportunistic Feedback for Downlink Multiuser Diversity", IEEE Communication Letters, Bd. 9, Nr. 10, Oktober 2005, offenbart ein Mehrbenutzer-System (multiuser system), in dem der System-Durchsatz durch Ausnutzen von Mehrbenutzer-Diversität gesteigert werden soll. Hierbei wird ein Schwellwert-basiertes opportunistisches Feedback-Protokoll mit Zufallszugriff eingesetzt.

Druckschrift US2006/0019672 offenbart ein HSDPA-System, bei dem ein Feedback über die Kanalqualität über einen zusätzlichen Hochgeschwindigkeits-Kontrollkanal von dem Endgerät zur Basisstation übertragen wird.

In dem Artikel "How much feedback is multi-user diversity really worth?" von GESBERT ET AL, 2004 IEEE INTERNATIONAL CONFERENCE ON COMMUNICATIONS; ICC 2004 ; 20 - 24 JUNE 2004, PARIS, IEEE OPERATIONS CENTER, PISCATAWAY, NJ, USA, Bd. 1, 20. Juni 2004 (2004-06-20), Seiten 234-238, XP01 0709995, DOI: 10.11 09/ICC.2004.1312486, ISBN: 978-0-7803-8533-7, wird ein Planungsalgorithmus für Funknetze vorgeschlagen, bei welchem die Zahl der für eine Multi-User- Diversität erforderlichen Rückmeldungen deutlich reduziert wird, ohne dass dies zu einer wesentlichen Verschlechterung des Algorithmus führt.

In dem Artikel "Benefits of multiuser diversity with limited feedback" von 04 JOHANSSON M, SIGNAL PROCESSING ADVANCES IN WIRELESS COMMUNICATIONS, 2003. SPAWC 200 3. 4TH IEEE WORKSHOP ON ROME, ITALY 15-18 JUNE 2003, PISCATAWAY, NJ, USA,IEEE, US, 15. Juni 2003 (2003-06-15), Seiten 155-159, XP01 0713393, DOI: 10.11 09/SPAWC.2003.1318941, ISBN: 978-0-7803-7858-2, werden die Auswirkungen der Multi-User- Diversität unter realistischen Bedingungen bei beschränkter Zahl der Rückmeldungen und schwankendem Verkehrsaufkommen untersucht. Ein einfaches optimiertes Verfahren zum Festlegen der Quantisierung von Raten wird angegeben, und es wird gezeigt, dass ein weiterer Vorteil der Multi-User- Diversität darin besteht, dass die Rückmeldungen pro Kanal deutlich eingeschränkt (quantisiert) werden können, ohne dass dies zu einer wesentlichen Verschlechterung führt.

Der Begriff der Kanalqualität bezieht sich sowohl auf eine Übertragungsfunktion zwischen einer Basisstation und dem jeweiligen Endgerät an dessen aktuellem Aufenthaltsort als auch auf Interferenzen, die an dem aktuellen Aufenthaltsort des jeweiligen Endgeräts auftreten und die z.B. durch eine weitere Basisstation oder weitere Endgeräte einer benachbarten Zelle des Mehrbenutzer-Funksystems verursacht werden. Die Kanalqualität aus Sicht des jeweiligen Endgeräts umfasst somit z.B. eine Signalstärke derjenigen Basisstation, in die das jeweilige Endgerät aktuell eingebucht ist, und eine Signalstärke anderer Basisstationen benachbarter Zellen. Die Signalstärke, und somit auch die Kanalqualität, sinkt verursacht z.B. durch Pfadverluste oder Abschattungen auf dem Pfad zwischen der Basisstation, in die das jeweilige Endgerät aktuell eingebucht ist, und dem jeweiligen Endgerät oder gegebenenfalls auch durch Mehrwegeausbreitung.

Die Aufgabe der Erfindung ist, ein Verfahren zum Betreiben eines Endgeräts eines Mehrbenutzer-Funksystems und ein entsprechendes Endgerät zu schaffen, das ein zuverlässiges Senden von Kanalinformationen von dem Endgerät an eine Basisstation ermöglicht. Eine weitere Aufgabe der Erfindung ist, ein Verfahren zum Betreiben einer Basisstation des Mehrbenutzer-Funksystems und eine entsprechende Basisstation zu schaffen, die ein zuverlässiges Senden von Kanalinformationen von dem Endgerät an die Basisstation ermöglicht. Ferner ist die Aufgabe der Erfindung, ein Mehrbenutzer-Funksystem zu schaffen, das ein zuverlässiges Senden von Kanalinformationen von dem Endgerät an die Basisstation ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch ein Verfahren zum Betreiben eines Endgeräts eines Mehrbenutzer-Funksystems und durch ein entsprechendes Endgerät. Jeweils ein aktueller Wert eines Kanalqualitätsindikators wird zu mindestens einem Übertragungskanal einer Basisstation des Mehrbenutzer-Funksystems ermittelt. Dieser mindestens eine Wert ist repräsentativ für eine Kanalqualität des jeweiligen Übertragungskanals. Eine aktuelle Kanalinformation wird bezogen auf den mindestens einen Übertragungskanal der Basisstation abhängig von dem mindestens einen aktuellen Wert des Kanalqualitätsindikators durch ein Zufallszugriffsverfahren an die Basisstation gesendet.

Der Basisstation ist im Voraus nicht bekannt, welche oder wie viele Endgeräte ihre Kanalinformation an die Basisstation senden. Dadurch, das die Kanalinformation durch das Zufallszugriffsverfahren an die Basisstation gesendet wird, muss nicht für jedes Endgerät ein eigener Kanal vorgesehen sein für das Senden der Kanalinformation, d.h. mehrere Endgeräte können für das Übertragen der Kanalinformation vorgesehene Ressourcen gemeinsam nutzen. Dies ermöglicht ein effizientes Nutzen der zur Verfügung stehenden Ressourcen. Dadurch, dass die Kanalinformation abhängig von dem mindestens einen aktuellen Wert des Kanalqualitätsindikators gesendet wird, ist ein besonders effizientes Nutzen der gemeinsamen Ressourcen möglich. Ferner ist dadurch ein zuverlässigeres Übertragen der Kanalinformation möglich.

In einer vorteilhaften Ausgestaltung umfasst die aktuelle Kanalinformation den mindestens einen aktuellen Wert des Kanalqualitätsindikators oder wird die aktuelle Kanalinformation inhaltlich abhängig von dem mindestens einen aktuellen Wert des Kanalqualitätsindikators gebildet. Dies hat den Vorteil, dass der Basisstation so sehr einfach die Kanalqualität aus Sicht des Endgeräts mitgeteilt werden kann.

In einer weiteren vorteilhaften Ausgestaltung ist die für die Übertragung der aktuellen Kanalinformation vorgesehene Ressource unterteilt in mindestens zwei voneinander verschiedene vorgegebene Übertragungsbereiche. Einer der mindestens zwei vorgegebenen Übertragungsbereiche wird abhängig von dem mindestens einen aktuellen Wert des Kanalqualitätsindikators ausgewählt. Die aktuelle Kanalinformation wird unter Nutzen des ausgewählten Übertragungsbereichs durch das Zufallszugriffsverfahren gesendet. Der Vorteil ist, dass für unterschiedliche Kanalqualitäten unterschiedliche Ressourcen reserviert werden können. Insbesondere können dadurch Endgeräte, bei denen aktuell eine besonders gute Kanalqualität vorherrscht, ihre aktuelle Kanalinformation ungestört von denjenigen Endgeräten an die Basisstation senden, bei denen aktuell eine schlechtere Kanalqualität vorherrscht. Dies ermöglicht ein besonders zuverlässiges Übertragen der aktuellen Kanalinformation an die Basisstation, insbesondere wenn der vorgegebene Übertragungsbereich groß ist oder eine Anzahl an Endgeräten, die ihre aktuelle Kanalinformation in dem vorgegebenen Übertragungsbereich senden, klein ist.

In diesem Zusammenhang ist es vorteilhaft, wenn ein Wertebereich des Kanalqualitätsindikators durch mindestens einen vorgegebenen Schwellenwert derart in Teilbereiche unterteilt ist, dass jedem vorgegebenen Übertragungsbereich jeweils ein Teilbereich zugeordnet ist. Der vorgegebene Übertragungsbereich wird ausgewählt abhängig von dem Teilbereich, in dem der mindestens eine aktuelle Wert des Kanalqualitätsindikators aktuell liegt. Dies hat den Vorteil, dass das Endgerät sehr einfach nach seiner Kanalqualität klassifizierbar ist und der vorgegebene Übertragungsbereich sehr einfach zugeordnet werden kann.

In einer weiteren vorteilhaften Ausgestaltung umfasst die Unterteilung der für das Senden der aktuellen Kanalinformation vorgesehenen Ressource mindestens zwei Zeitschlitze und/oder mindestens zwei Frequenzbereiche und/oder mindestens zwei Übertragungskodes. Jeweils mindestens ein Zeitschlitz und/oder mindestens ein Frequenzbereich und/oder mindestens ein Übertragungskode bildet einen der mindestens zwei vorgegebenen Übertragungsbereiche. Der Vorteil ist, dass dadurch eine besonders effiziente Nutzung der Ressourcen möglich ist und das Verfahren auch bei einer großen Anzahl von Endgeräten in einer Zelle des Mehrbenutzer-Funksystems ein zuverlässiges Übertragen der Kanalinformation ermöglicht. Ferner bestehen so verschiedene Möglichkeiten, die Übertragungsbereiche vorzugeben.

In einer weiteren vorteilhaften Ausgestaltung wird der mindestens eine aktuelle Wert des Kanalqualitätsindikators für das Auswählen des Übertragungsbereichs unabhängig von der aktuellen Kanalqualität des mindestens einen Übertragungskanals der Basisstation zeitabhängig hin zu einer höheren Kanalqualität modifiziert. Dies hat den Vorteil, dass auch ein Endgerät, bei dem dauerhaft eine schlechte Kanalqualität vorherrscht, seine Kanalinformation zuverlässig an die Basisstation senden kann, wenn der mindestens eine Wert des Kanalqualitätsindikators mit der Zeit das Senden in einem vorgegebenen Übertragungsbereich erlaubt, der ansonsten Endgeräten mit einer höheren Kanalqualität vorbehalten ist.

In einer weiteren vorteilhaften Ausgestaltung ist eine Anzahl der Sendungen der aktuellen Kanalinformation abhängig von dem mindestens einen aktuellen Wert des Kanalqualitätsindikators. Die Anzahl ist höher für einen Wert des Kanalqualitätsindikators, der eine höhere Kanalqualität repräsentiert, als für einen Wert des Kanalqualitätsindikators, der eine geringere Kanalqualität repräsentiert. Durch ein mehrfaches Senden der Kanalinformation, z.B. zeitlich zueinander versetzt und oder in unterschiedlichen Frequenzbändern, kann sehr einfach eine Wahrscheinlichkeit erhöht werden, dass die Kanalinformation erfolgreich an die Basisstation übertragen wird.

In einer weiteren vorteilhaften Ausgestaltung wird der mindestens eine aktuelle Wert des Kanalqualitätsindikators auf einen Broadcast- oder einen Synchronisationskanal der Basisstation bezogen ermittelt. In einem Randbereich der Zelle des Mehrbenutzer-Funksystems ist im Allgemeinen die Kanalqualität schlechter als nahe bei der Basisstation. Durch den Bezug des mindestens einen aktuellen Werts des Kanalqualitätsindikators auf den Broadcast- oder den Synchronisationskanal als Referenz ist eine bessere Vergleichbarkeit der jeweiligen Werte des Kanalqualitätsindikators von Endgeräten gegeben, die sich nahe bei der Basisstation oder in dem Randbereich der Zelle befinden. Auf diese Weise wird verhindert, dass Endgeräte in dem Randbereich der Zelle gegenüber Endgeräten nahe bei der Basisstation benachteiligt werden. Ferner ist dies insbesondere vorteilhaft, wenn die an dem jeweiligen Standort des Endgeräts vorherrschende Kanalqualität des Übertragungskanals aufgrund z.B. von Beamforming und durch ein periodisches Verändern einer Abstrahlcharakteristik zeitlichen Veränderungen unterworfen ist, während der Broadcast- oder der Synchronisationskanal in alle Richtungen weitgehend unverändert und mit gleicher Stärke abgestrahlt wird.

In einer weiteren vorteilhaften Ausgestaltung wird der jeweils mindestens eine aktuelle Wert des Kanalqualitätsindikators abhängig von mindestens einem erfassten aktuellen Kanalqualitätsmesswert ermittelt, der dem jeweils mindestens einen aktuellen Wert des Kanalqualitätsindikators zeitlich zugeordnet ist. Der mindestens eine aktuelle Wert des Kanalqualitätsindikators wird jeweils auf einen Mittelwert von Kanalqualitätsmesswerten bezogen ermittelt, die zeitlich vorangegangen Werten des Kanalqualitätsindikators zugeordnet sind. Durch den Bezug des mindestens einen aktuellen Werts des Kanalqualitätsindikators auf den Mittelwert von vorangegangenen Kanalqualitätsmesswerten als Referenz ist eine bessere Vergleichbarkeit der jeweiligen Werte des Kanalindikators von Endgeräten gegeben, die sich nahe bei der Basisstation oder in dem Randbereich der Zelle befinden. Auf diese Weise wird verhindert, dass Endgeräte in dem Randbereich der Zelle gegenüber Endgeräten nahe bei der Basisstation benachteiligt werden. Ferner können so Verbesserungen der Kanalqualität sehr einfach erkannt und genutzt werden, die Kanalinformation in einem vorgegebenen Übertragungsbereich zu senden, der eine hohe Zuverlässigkeit der Übertragung der Kanalinformation, d.h. eine geringe Kollisionswahrscheinlichkeit, aufweist.

In einer weiteren vorteilhaften Ausgestaltung wird der mindestens eine aktuelle Wert des Kanalqualitätsindikators abhängig von einem aktuellen Signal-zu-Interferenz-plus-Rauschleistungsverhältnis des mindestens einen Übertragungskanals der Basisstation ermittelt. Der Vorteil ist, dass dies eine einfache und zuverlässige Beurteilung der Kanalqualität ermöglicht. Das Signal-zu-Interferenz-plus-Rauschleistungsverhältnis wird abgekürzt auch mit SINR bezeichnet.

Gemäß eines zweiten Aspekts zeichnet sich die Erfindung aus durch ein Verfahren zum Betreiben der Basisstation des Mehrbenutzer-Funksystems und durch die entsprechende Basisstation. Die Ressource für ein Empfangen der aktuellen Kanalinformation wird bereitgestellt. Die Ressource ist vorgesehen für einen Zugriff gemäß dem Zufallszugriffsverfahren. Mindestens eine aktuelle Kanalinformation wird empfangen, die jeweils von einem Endgerät des Mehrbenutzer-Funksystems nach dem Verfahren zum Betreiben des Endgeräts an die Basisstation gesendet wurde. Abhängig von der mindestens einen aktuellen Kanalinformation werden Ressourcen mindestens eines Übertragungskanals der Basisstation dem mindestens einen Endgerät zugewiesen.

Der Basisstation ist im Voraus nicht bekannt, welche oder wie viele Endgeräte ihre Kanalinformation an die Basisstation senden. Dadurch, dass die Kanalinformation durch das Zufallszugriffsverfahren an die Basisstation gesendet wird, muss nicht für jedes Endgerät ein eigener Kanal vorgesehen sein für das Senden der Kanalinformation, d.h. mehrere Endgeräte können die für das Übertragen der Kanalinformation vorgesehenen Ressourcen gemeinsam nutzen. Dies ermöglicht ein effizientes Nutzen der zur Verfügung stehenden Ressourcen. Ferner ist ein zuverlässigeres Übertragen der Kanalinformation möglich.

In einer vorteilhaften Ausgestaltung der Erfindung gemäß dem zweiten Aspekt werden die mindestens zwei vorgegebenen Übertragungsbereiche und/oder der mindestens eine vorgegebene Schwellenwert dem jeweiligen Endgerät abhängig von einer erwarteten Anzahl von aktuellen Kanalinformationen vorgegeben, die von dem mindestens einen Endgerät in dem jeweiligen vorgegebenen Übertragtragungsbereich gesendet werden, und/oder abhängig von einer Wahrscheinlichkeit vorgegeben, dass aktuelle Kanalinformationen von gleichzeitig in demselben vorgegebenen Übertragungsbereich sendenden Endgeräten durch Kollision verloren gehen. Dies hat den Vorteil, dass dadurch ein einfaches Steuern der Kollisionswahrscheinlichkeit und damit der Zuverlässigkeit der Übertragung der Kanalinformation möglich ist. Ferner ist ein einfaches Steuern der Aufnahme oder Abweisung von Endgeräten aus bzw. in benachbarte Zellen des Mehrbenutzer-Funksystems möglich.

Gemäß eines dritten Aspekts zeichnet sich die Erfindung aus durch das Mehrbenutzer-Funksystem, das mindestens eine Basisstation gemäß dem zweiten Aspekt der Erfindung und mindestens ein Endgerät gemäß dem ersten Aspekt der Erfindung umfasst. Die Vorteile des Mehrbenutzer-Funksystems ergeben sich entsprechend aus den Vorteilen der mindestens einen Basisstation und des mindestens einen Endgeräts.

Ausführungsbeispiele der Erfindung sind im Folgenden anhand der schematischen Zeichnungen erläutert. Es zeigen:
- Figur 1: eine Zelle eines Mehrbenutzer-Funksystems,
- Figur 2: ein erstes Frequenz-Zeitdiagramm,
- Figur 3: ein zweites Frequenz-Zeitdiagramm,
- Figur 4: ein Beispiel für eine Übertragungssituation in der Zelle des Mehrbenutzer-Funksystems,
- Figur 5: ein Beispiel für eine Unterteilung eines Wertebereichs eines Kanalqualitätsindikators,
- Figur 6: ein erstes Ablaufdiagramm und
- Figur 7: ein zweites Ablaufdiagramm.

Elemente gleicher Konstruktion oder Funktion sind figurenübergreifend mit den gleichen Bezugszeichen versehen.

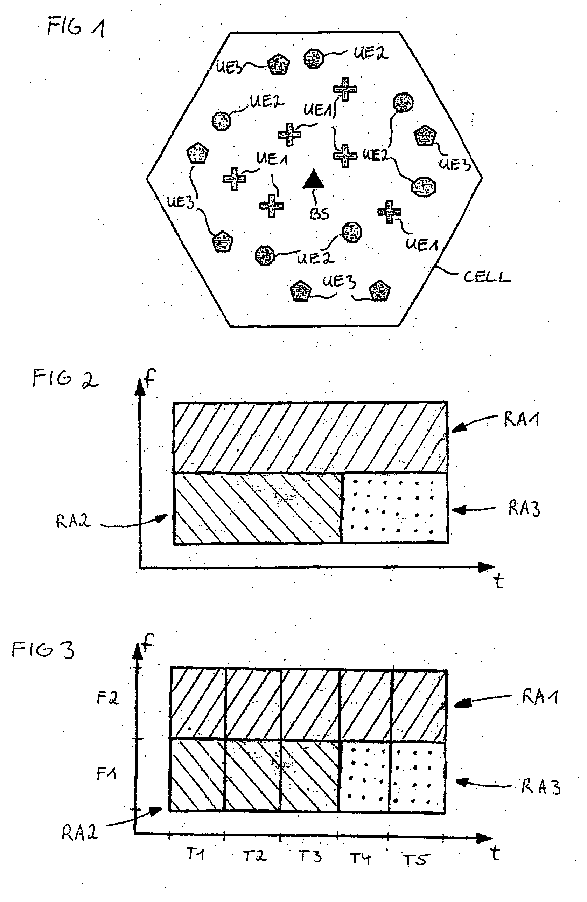

Figur 1 zeigt ein Beispiel für eine Zelle CELL eines Mehrbenutzer-Funksystems mit einer Basisstation BS und achtzehn Endgeräten UE. Die Endgeräte UE sind beispielsweise als Mobiltelefon, persönlicher digitaler Assistent oder als ein anderer tragbarer Computer ausgebildet. Die Endgeräte UE sind bei der Basisstation BS für die Zelle CELL eingebucht. Die Endgeräte UE und die Basisstation BS sind ausgebildet, miteinander zu kommunizieren. Die Endgeräte UE sind im Allgemeinen in der Zelle CELL beweglich und können auch die Zelle CELL verlassen. Ferner können weitere Endgeräte UE in die Zelle CELL eintreten, z.B. von einer benachbarten Zelle oder durch Einschalten eines Endgeräts UE in einem Bereich der Zelle CELL.

Um eine hohe spektrale Effizienz und einen möglichst hohen Durchsatz bezüglich einer Datenübertragung zwischen der Basisstation BS und den Endgeräten UE erreichen zu können, wird von der Basisstation BS vorzugsweise ein so genanntes "Opportunistic Scheduling" zum Zuweisen von Ressourcen R mindestens eines Übertragungskanals der Basisstation BS durchgeführt. Dadurch werden bevorzugt denjenigen Endgeräten UE Ressourcen R des mindestens einen Übertragungskanals zugewiesen, die aktuell eine besonders gute Empfangssituation aufweisen, d.h. die den mindestens einen Übertragungskanal der Basisstation BS mit einer besonders hohen Kanalqualität empfangen können. Um diese Zuweisung der Ressourcen R des mindestens einen Übertragungskanals durchführen zu können, muss die Basisstation BS die Empfangssituation der jeweiligen Endgeräte UE kennen, insbesondere bezüglich Interferenzen, z.B. mit einer benachbarten Zelle, oder einer Dämpfung oder Auslöschung in für die Kommunikation genutzten Frequenzbändern oder bezüglich anderer Störungen. Bei dem "Opportunistic Scheduling" wird die Vielfalt der verschiedenen Empfangssituationen der Endgeräte UE in der Zelle CELL des Mehrbenutzer-Funksystems ausgenutzt. Dies wird auch als "Multi-User Diversity" bezeichnet. Simulationen haben gezeigt, dass durch "Opportunistic Scheduling" eine erhebliche Zunahme des maximalen Durchsatzes summiert über alle Endgeräte UE in der Zelle CELL erreicht werden kann.

Die Empfangssituation ist im Allgemeinen für jedes Endgerät UE abhängig von dessen Aufenthaltsort oder Standort individuell verschieden. Die Endgeräte UE senden daher ihre jeweilige Empfangssituation in Form einer Kanalinformation CI an die Basisstation BS. Bevorzugt wird die Kanalinformation CI nur dann an die Basisstation BS gesendet, wenn Daten von der Basisstation BS empfangen oder an die Basisstation BS gesendet werden sollen. Daten sind hier insbesondere Nutzdaten, d.h. Daten, die nicht für die Aufrechterhaltung des Betriebs des Mehrbenutzer-Funksystems vorgesehen sind, sondern durch die Nutzer der Endgeräte UE genutzt werden, z.B. für Sprach-, Video- oder Dateiübertragung. Ferner erfolgt das Senden der Kanalinformation CI bevorzugt nur dann, wenn die aktuelle Empfangssituation gut genug ist, um das Zuweisen von Ressourcen R des mindestens einen Übertragungskanals durch das "Opportunistic Scheduling" zu ermöglichen.

Für das Senden der Kanalinformation CI von den Endgeräten UE an die Basisstation BS stellt die Basisstation BS Ressourcen zur Verfügung. Diese Ressourcen können zeitlich oder bezüglich einer Übertragungsfrequenz oder bezüglich eines Übertragungskodes vorgegeben sein. Figur 2 zeigt als Beispiel zeitlich und bezüglich der Übertragungsfrequenz vorgegebene Ressourcen in einem Frequenz-Zeitdiagramm. Die Endgeräte UE senden die Kanalinformation CI durch ein Zufallszugriffsverfahren unter Nutzung der von der Basisstation BS bereitgestellten Ressourcen für das Übertragen der Kanalinformation CI.

Figur 3 zeigt eine Unterteilung der Ressourcen in einzelne Schlitze oder Slots, die von den Endgeräten UE für das Senden der Kanalinformation CI genutzt werden können. In diesem Beispiel sind die Ressourcen unterteilt in fünf Zeitschlitze, d.h. einen ersten, zweiten, dritten, vierten und fünften Zeitschlitz T1, T2, T3, T4, T5, und in zwei Frequenzbänder, d.h. ein erstes Frequenzband F1 und ein zweites Frequenzband F2. Bei dem Zufallszugriffsverfahren wählt das jeweilige Endgerät UE, das seine Kanalinformation CI an die Basisstation BS senden möchte, zufällig mindestens einen dieser Schlitze aus und sendet seine Kanalinformation CI über diesen an die Basisstation BS. Dadurch, dass nicht festgelegt ist, welches Endgerät UE welchen Schlitz für das Übertragen seiner jeweiligen Kanalinformation CI nutzt, kann es jedoch zu Kollisionen kommen, wenn zwei oder mehr Endgeräte UE gleichzeitig denselben Schlitz für das Übertragen ihrer jeweiligen Kanalinformation CI nutzen. Bei einer solchen Kollision wird die Kanalinformation CI im Allgemeinen nicht erfolgreich an die Basisstation BS übertragen.

Um sicherstellen zu können, dass die jeweilige Kanalinformation CI derjenigen Endgeräte UE zuverlässig, d.h. mit hoher Wahrscheinlichkeit ohne Kollision an die Basisstation BS übertragen werden kann, deren aktuelle Empfangssituation besonders gut ist, erfolgt das Senden der jeweiligen Kanalinformation CI der Endgeräte UE abhängig von mindestens einem aktuellen Wert CQI eines Kanalqualitätsindikators. Der mindestens eine aktuelle Wert CQI des Kanalqualitätsindikators wird zu dem mindestens einen Übertragungskanal der Basisstation BS ermittelt. Der mindestens eine aktuelle Wert CQI des Kanalqualitätsindikators ist repräsentativ für die jeweilige Kanalqualität des mindestens einen Übertragungskanals der Basisstation BS oder anders ausgedrückt, der mindestens eine aktuelle Wert CQI des Kanalqualitätsindikators ist repräsentativ für die aktuelle Empfangssituation des jeweiligen Endgeräts UE in der Zelle CELL. Die aktuelle Kanalinformation CI umfasst vorzugsweise den mindestens einen aktuellen Wert CQI des Kanalqualitätsindikators oder wird inhaltlich abhängig von dem mindestens einen aktuellen Wert CQI des Kanalqualitätsindikators gebildet.

Die Endgeräte UE in der Zelle CELL werden klassifiziert nach ihrem jeweiligen mindestens einen Wert CQI des Kanalqualitätsindikators. Endgeräte UE1 mit einem hohen Wert CQI des Kanalqualitätsindikators sind mit einem Kreuz gekennzeichnet, Endgeräte UE2 mit einem mittleren Wert CQI des Kanalqualitätsindikators sind mit einem Achteck gekennzeichnet und Endgeräte UE3 mit einem niedrigen Wert CQI des Kanalqualitätsindikators sind mit einem Fünfeck gekennzeichnet. Es sind auch mehr oder weniger als diese drei Klassen möglich.

Die Wahrscheinlichkeit für das kollisionsfreie Übertragen der Kanalinformation CI des mindestens einen Endgeräts UE kann erhöht werden durch gegebenenfalls mehrfaches Senden der Kanalinformation CI in unterschiedlichen Schlitzen. Eine Anzahl der Sendungen derselben Kanalinformation CI ist dabei abhängig von dem mindestens einen aktuellen Wert CQI des Kanalqualitätsindikators oder der zugeordneten Klasse. Je höher die Anzahl der Sendungen, desto höher ist die Wahrscheinlichkeit, dass die Kanalinformation CI erfolgreich, d.h. kollisionsfrei, an die Basisstation BS übertragen wird. Jedoch erhöht das mehrfache Senden der Kanalinformation CI insgesamt die Kollisionswahrscheinlichkeit.

Alternativ oder zusätzlich sind die Ressourcen für das Übertragen der Kanalinformation CI an die Basisstation BS unterteilt in mindestens zwei verschiedene vorgegebene Übertragungsbereiche RA (Figur 2). Jeder Klasse ist ein vorgegebener Übertragungsbereich RA zugeordnet. Ein vorgegebener erster Übertragungsbereich RA1 umfasst in diesem Beispiel das zweite Frequenzband F2 mit dem ersten, zweiten, dritten, vierten und fünften Zeitschlitz T1, T2, T3, T4, T5 (Figur 3). Ein vorgegebener zweiter Übertragungsbereich RA2 umfasst in dem ersten Frequenzband F1 den ersten, zweiten und dritten Zeitschlitz T1, T2, T3. Ein vorgegebener dritter Übertragungsbereich RA3 umfasst entsprechend in dem ersten Frequenzband F1 den vierten und den fünften Zeitschlitz T4, T5. Die Anzahl der vorgegebenen Übertragungsbereiche RA, die Größe der jeweiligen vorgegebenen Übertragungsbereiche RA, d.h. die Anzahl der Schlitze des jeweiligen vorgegebenen Übertragungsbereichs, oder die Anordnung der vorgegebenen Übertragungsbereiche RA in den Ressourcen kann auch anders vorgegeben sein und kann im Rahmen der Möglichkeiten des Mehrbenutzer-Funksystems nahezu beliebig gewählt werden. Die Unterteilung kann auch bezüglich des Übertragungskodes erfolgen.

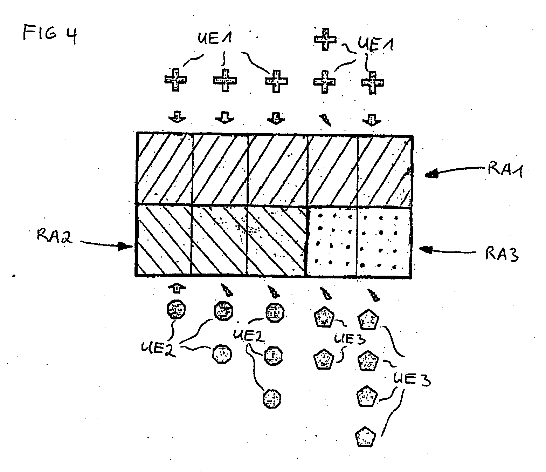

In diesem Beispiel sind jeweils sechs Endgeräte UE für jeden dieser drei vorgegebenen Übertragungsbereiche RA klassifiziert, d.h. die Endgeräte UE senden ihre Kanalinformation CI jeweils in den Schlitzen des vorgegebenen Übertragungsbereichs RA abhängig von ihrer Klasse, d.h. abhängig von ihrem jeweiligen Wert CQI des Kanalqualitätsindikators. Dadurch, dass den Endgeräten UE1 mit dem hohen Wert CQI des Kanalqualitätsindikators mehr Ressourcen, in diesem Beispiel fünf Schlitze, für die Übertragung ihrer aktuellen Kanalinformation CI durch die Basisstation BS zur Verfügung gestellt wird, ist eine Wahrscheinlichkeit für eine Kollision der ausgesendeten Kanalinformationen CI gering. In dem in Figur 4 gezeigten Beispiel einer Übertragungssituation in der Zelle CELL übertragen vier der sechs Endgeräte UE1 mit dem hohen Wert CQI des Kanalqualitätsindikators ihre Kanalinformation CI erfolgreich, d.h. ohne Kollision, an die Basisstation BS. Nur in dem vierten Zeitschlitz T4 in dem zweiten Frequenzband F2 kommt es zur Kollision. Entsprechend ist die Wahrscheinlichkeit für die Kollision der ausgesendeten Kanalinformation CI für die Endgeräte UE2 mit dem mittleren Wert CQI des Kanalqualitätsindikators und die Endgeräte UE3 mit dem niedrigen Wert CQI des Kanalqualitätsindikators höher, da diesen bei gleicher Anzahl von Endgeräten UE weniger Ressourcen für das Senden der Kanalinformation CI zur Verfügung gestellt wird, d.h. drei Schlitze in dem vorgegebenen zweiten Übertragungsbereich RA2 und nur zwei Schlitze in dem vorgegebenen dritten Übertragungsbereich RA3. Von den sechs Endgeräten UE2 mit dem mittleren Wert CQI des Kanalqualitätsindikators kann nur ein Endgerät UE seine Kanalinformation CI ohne Kollision in dem ersten Zeitschlitz T1 des ersten Frequenzbands F1 an die Basisstation BS übertragen. Bei den sechs Endgeräten UE3 mit dem geringen Wert CQI des Kanalqualitätsindikators sind beide verfügbaren Schlitze des vorgegebenen dritten Übertragungsbereichs von Kollisionen betroffen. Die jeweilige Kanalinformation CI wird daher von denjenigen Endgeräten UE besonders zuverlässig an die Basisstation BS übertragen, deren mindestens eine Wert CQI des Kanalqualitätsindikators eine hohe Kanalqualität repräsentiert.

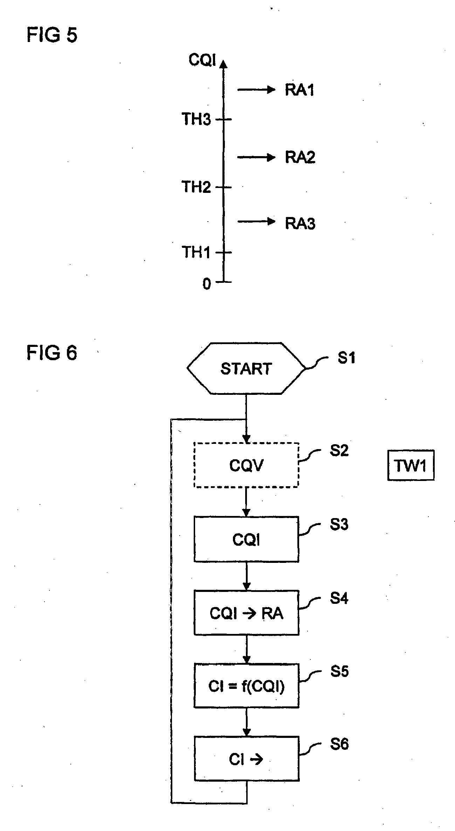

Figur 5 zeigt ein Beispiel einer Unterteilung eines Wertebereichs des Kanalqualitätsindikators durch vorgegebene Schwelelenwerte TH. Die vorgegebenen Schwellenwerte TH unterteilen den Wertebereich in Teilbereiche. Jedem vorgegebenen Übertragungsbereich RA ist einer dieser Teilbereiche zugeordnet. Ein Wert CQI des Kanalqualitätsindikators, der zwischen einem vorgegebenen ersten Schwellenwert TH1 und einem vorgegebenen zweiten Schwellenwert TH2 liegt, ist dem vorgegebenen dritten Übertragungsbereich RA3 zugeordnet. Endgeräte UE, deren Wert CQI des Kanalqualitätsindikators in diesem Teilbereich liegen, sind den Endgeräten UE3 mit niedrigem Wert CQI des Kanalqualitätsindikators zugeordnet. Entsprechend ist der Teilbereich des Wertebereichs zwischen dem vorgegebenen zweiten Schwellenwert TH2 und einem vorgegebenen dritten Schwellenwert TH3 dem vorgegebenen zweiten Übertragungsbereich RA2 zugeordnet. Die Endgeräte UE, deren Wert CQI des Kanalqualitätsindikators in diesem Teilbereich liegen, sind den Endgeräten UE2 mit mittlerem Wert CQI des Kanalqualitätsindikators zugeordnet. Der Teilbereich des Wertebereichs oberhalb des vorgegebenen dritten Schwellenwerts TH3 ist dem vorgegebenen ersten Übertragungsbereich RA1 zugeordnet. Endgeräte UE, deren Wert CQI des Kanalqualitätsindikators in diesem Teilbereich liegt, sind den Endgeräten UE1 mit dem hohen Wert CQI des Kanalqualitätsindikators zugeordnet. Das jeweilige Endgerät UE wählt somit einen der vorgegebenen Übertragungsbereiche RA abhängig von dem jeweiligen Wert CQI des Kanalqualitätsindikators. Durch geeignete Vorgabe der vorgegebenen Schwellenwerte TH kann die Zuordnung zu einem der vorgegebenen Übertragungsbereiche RA gesteuert werden. Dadurch wird ferner die Anzahl der Endgeräte beeinflusst, die in dem jeweiligen vorgegebenen Übertragungsbereich RA ihre Kanalinformation CI senden. Bevorzugt werden die vorgegebenen Übertragungsbereiche RA und/oder die vorgegebenen Schwellenwerte TH den Endgeräten UE durch die Basisstation BS vorgegeben.

Figur 6 zeigt ein erstes Ablaufdiagramm eines Programms zum Betreiben des jeweiligen Endgeräts UE. Das Programm beginnt in einem Schritt S1. Vorzugsweise wird in einem Schritt S2 mindestens ein aktueller Kanalqualitätsmesswert CQV erfasst. Der mindestens eine erfasste aktuelle Kanalqualitätsmesswert CQV ist zeitlich jeweils dem mindestens einen aktuellen Wert CQI des Kanalqualitätsindikators zugeordnet. In einem Schritt S3 wird der mindestens eine aktuelle Wert CQI des Kanalqualitätsindikators ermittelt.

Bevorzugt wird der mindestens eine aktuelle Wert CQI des Kanalqualitätsindikators abhängig von dem mindestens einen aktuellen Kanalqualitätsmesswert CQV ermittelt. Beispielsweise wird abhängig von Kanalqualitätsmesswerten CQV, die zeitlich vorangegangenen Werten CQI des Kanalqualitätsindikators zugeordnet sind, ein Mittelwert ermittelt und als eine Referenz genutzt. Der mindestens eine aktuelle Wert CQI des Kanalqualitätsindikators wird relativ zu dieser Referenz ermittelt. Dadurch können Veränderungen der Kanalqualität im zeitlichen Verlauf zuverlässig erfasst werden und das Auswählen des vorgegebenen Übertragungsbereichs und das Aussenden der Kanalinformation CI erfolgen dann abhängig von diesen Veränderungen der Kanalqualität.

Alternativ oder zusätzlich kann die Kanalqualität des Übertragungskanals auch auf eine Kanalqualität eines Broadcast- oder Synchronisationskanals der Basisstation BS als Referenz bezogen werden. Der mindestens eine aktuelle Wert CQI des Kanalqualitätsindikators kann dann abhängig von diesen Kanalqualitäten ermittelt werden, z.B. als ein Verhältnis der Kanalqualität des mindestens einen Übertragungskanals zu der Kanälqualität des Broadcast- oder Synchronisationskanals.

Ferner kann vorgesehen sein, den mindestens einen aktuellen Wert CQI des Kanalqualitätsindikators unabhängig von der aktuellen Kanalqualität des mindestens einen Übertragungskanals zeitabhängig hin zu einer höheren Kanalqualität zu modifizieren, z.B. durch Multiplikation mit einem Wert eines aufwärts zählenden Zeitgebers. Der Wert des Zeitgebers entspricht einem Wichtungsfaktor mit zeitlich zunehmenden Gewicht. Dies ermöglicht auch Engeräten UE mit dauerhaft vorherrschender schlechter Kanalqualität ihre Kanalinformation CI erfolgreich an die Basisstation BS zu übertragen, wenn der aktuelle Wert CQI des Kanalqualitätsindikators so groß wird, dass ein für die Übertragung günstiger vorgegebener Übertragungsbereich RA ausgewählt wird, der nur aufgrund der aktuellen Kanalqualität nicht erreichbar gewesen wäre. Bevorzugt wird der Zeitgeber zurückgesetzt, wenn die Basisstation BS den Erhalt der Kanalinformation CI bestätigt.

In einem Schritt S4 wird abhängig von dem mindestens einen aktuellen Wert CQI des Kanalqualitätsindikators der zugehörige vorgegebene Übertragungsbereich RA ausgewählt, z.B. entsprechend der in Figur 5 dargestellten Zuordnung. In einem Schritt S5 wird die aktuelle Kanalinformation CI abhängig von dem mindestens einen aktuellen Wert CQI des Kanalqualitätsindikators ermittelt. In einem Schritt S6 wird die aktuelle Kanalinformation CI unter Nutzen des ausgewählten vorgegebenen Übertragungsbereichs RA durch das Zufallszugriffsverfahren an die Basisstation BS gesendet.

Die Schritte S5 und S6 können auch entfallen, wenn z.B. in dem Schritt S4 der aktuelle Wert CQI des Kanalqualitätsindikators in einem Teilbereich liegt, dem kein vorgegebener Übertragungsbereich RA zugewiesen ist, z.B. wenn der mindestens eine aktuelle Wert CQI des Kanalqualitätsindikators kleiner ist als der vorgegebene erste Schwellenwert TH1. Das Programm wird in dem Schritt S2 oder, falls dieser nicht vorgesehen ist, in dem Schritt S3 fortgesetzt, gegebenenfalls nach Ablauf einer ersten Wartezeitdauer TW1. Vorzugsweise wird das Programm nur dann ausgeführt, wenn Daten von der Basisstation BS empfangen werden sollen oder Daten an die Basisstation BS gesendet werden sollen.

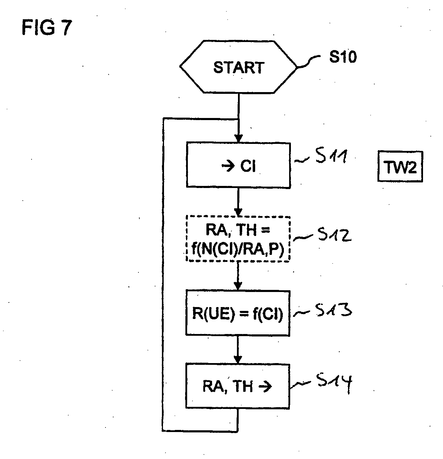

Figur 7 zeigt ein zweites Ablaufdiagramm eines Programms zum Betreiben der Basisstation BS. Das Programm beginnt in einem Schritt S10. Der Schritt S10 umfasst beispielsweise das Bereitstellen der Ressourcen für das Übertragen der aktuellen Kanalinformationen CI der Endgeräte UE. In einem Schritt S11 wird die mindestens eine aktuelle Kanalinformation CI von den Endgeräten UE empfangen.

Bevorzugt werden in einem Schritt S12 die vorgegebenen Übertragungsbereiche RA und die vorgegebenen Schwellenwerte TH vorgegeben abhängig von einer erwarteten Anzahl N von aktuellen Kanalinformationen CI, die von dem mindestens einen Endgerät UE in dem jeweiligen vorgegebenen Übertragungsbereich RA gesendet werden, und/oder abhängig von einer Wahrscheinlichkeit P, dass aktuelle Kanalinformationen CI von gleichzeitig in demselben vorgegebenen Übertragungsbereich RA sendenden Endgeräten UE durch Kollision verloren gehen. Die Wahrscheinlichkeit P entspricht beispielsweise einer gewünschten oder einer tolerierbaren Kollisionswahrscheinlichkeit. So wird im Allgemeinen für Endgeräte UE, bei denen eine schlechte Kanalqualität vorherrscht, eine höhere Kollisionswahrscheinlichkeit tolerierbar sein als für Endgeräte UE, bei denen eine gute Kanalqualität vorherrscht, da die Zuweisung von Ressourcen R für den mindestens einen Übertragungskanal gemäß dem "Opportunistic Scheduling" im Wesentlichen nur für Endgeräte UE mit hinreichend guter Kanalqualität in Frage kommt.

Die mindestens zwei vorgegebenen Übertragungsbereiche RA und/oder der mindestens eine vorgegebene Schwellenwert TH können auch anders vorgegeben werden, insbesondere abhängig von einer Auslastung der Basisstation BS in der Zelle CELL. Die mindestens zwei vorgegebenen Übertragungsbereiche RA und/oder der mindestens eine vorgegebene Schwellenwert TH können jedoch auch fest vorgegeben sein.

In einem Schritt S13 werden die Ressourcen R des mindestens einen Übertragungskanals der Basisstation BS den jeweiligen Endgeräten UE zugewiesen abhängig von den empfangenen aktuellen Kanalinformationen CI der jeweiligen Endgeräte UE, z.B. per "Opportunistic Scheduling". Die zugewiesenen Ressourcen R des mindestens einen Übertragungskanals können dann von der Basisstation BS oder von den Endgeräten UE genutzt werden für das Übertragen von Daten. Ferner kann die jeweilige Kanalinformation CI genutzt werden zur "Link Adaption". In einem Schritt S14 werden der vorgegebene Übertragungsbereich RA, der mindestens eine Schwellenwert TH und gegebenenfalls die zugewiesenen Ressourcen R des mindestens einen Übertragungskanals durch die Basisstation BS an die Endgeräte UE gesendet. Das Programm wird in dem Schritt S11 fortgesetzt, gegebenenfalls nach Ablauf einer vorgegebenen zweiten Wartezeitdauer TW2.

### Bezugszeichenliste:

- BS: Basisstation
- CELL: Zelle
- CI: aktuelle Kanalinformation
- CQV: aktueller Kanalqualitätsmesswert
- CQI: aktueller Wert des Kanalqualitätsindikators
- F1: erstes Frequenzband
- F2: zweites Frequenzband
- N: Anzahl
- P: Wahrscheinlichkeit
- R: Ressourcen des Übertragungskanals
- RA: vorgegebener Übertragungsbereich
- RA1: vorgegebener erster Übertragungsbereich
- RA2: vorgegebener zweiter Übertragungsbereich
- RA3: vorgegebener dritter Übertragungsbereich
- T1: erster Zeitschlitz
- T2: zweiter Zeitschlitz
- T3: dritter Zeitschlitz
- T4: vierter Zeitschlitz
- T5: fünfter Zeitschlitz
- TH: vorgegebener Schwellenwert
- TH1: vorgegebener erster Schwellenwert
- TH2: vorgegebener zweiter Schwellenwert
- TH3: vorgegebener dritter Schwellenwert
- TW1: vorgegebene erste Wartezeitdauer
- TW2: vorgegebene zweite Wartezeitdauer
- UE: Endgerät
- UE1: Endgerät mit hohem Wert des Kanalqualitätsindikators
- UE2: Endgerät mit mittlerem Wert des Kanalqualitätsindikators
- UE3: Endgerät mit niedrigem Wert des Kanalqualitätsindikators

## Patentansprüche

1. Verfahren zum Betreiben eines Endgeräts (UE) eines Mehrbenutzer-Funksystems, bei dem
- jeweils ein aktueller Wert (CQI) eines Kanalqualitätsindikators für mindestens einen Übertragungskanal einer Basisstation (BS) des Mehrbenutzer-Funksystems ermittelt wird, der repräsentativ ist für eine Kanalqualität des jeweiligen Übertragungskanals, und
- eine aktuelle Kanalinformation (CI) bezogen auf den mindestens einen Übertragungskanal der Basisstation (BS) abhängig von dem mindestens einen aktuellen Wert (CQI) des Kanalqualitätsindikators durch ein Zufallszugriffsverfahren an die Basisstation (BS) gesendet wird,
**dadurch gekennzeichnet, dass**
- eine für eine Übertragung der aktuellen Kanalinformation (CI) vorgesehene Ressource unterteilt ist in mindestens zwei voneinander verschiedene vorgegebene Übertragungsbereiche (RA),
- abhängig von dem mindestens einen aktuellen Wert (CQI) des Kanalqualitätsindikators einer der mindestens zwei vorgegebenen Übertragungsbereiche (RA) ausgewählt wird und
- die aktuelle Kanalinformation (CI) unter Nutzen des ausgewählten Übertragungsbereichs (RA) durch das Zufallszugriffsverfahren gesendet wird.

2. Verfahren nach Anspruch 1, bei dem die aktuelle Kanalinformation (CI) den mindestens einen aktuellen Wert (CQI) des Kanalqualitätsindikators umfasst oder die aktuelle Kanalinformation (CI) inhaltlich abhängig von dem mindestens einen aktuellen Wert (CQI) des Kanalqualitätsindikators gebildet wird.

3. Verfahren nach Anspruch 1 oder 2, bei dem die mindestens zwei vorgegebenen Übertragungsbereiche (RA)
- abhängig von einer erwarteten Anzahl (N) von aktuellen Kanalinformationen, die von dem mindestens einen Endgerät (UE) in dem jeweiligen vorgegebenen Übertragtragungsbereich (RA) gesendet werden, und/oder
- abhängig von einer Wahrscheinlichkeit (P), dass aktuelle Kanalinformationen (CI) von gleichzeitig in demselben vorgegebenen Übertragungsbereich (RA) sendenden Endgeräten (UE) durch Kollision verloren gehen, vorgegeben wird.

4. Verfahren nach einem der vorstehenden Ansprüche, bei dem
- ein Wertebereich des Kanalqualitätsindikators durch mindestens einen vorgegebenen Schwellenwert (TH) derart in Teilbereiche unterteilt ist, dass jedem vorgegebenen Übertragungsbereich (RA) jeweils ein Teilbereich zugeordnet ist, und
- der vorgegebene Übertragungsbereich (RA) ausgewählt wird abhängig von dem Teilbereich, in dem der mindestens eine aktuelle Wert (CQI) des Kanalqualitätsindikators aktuell liegt.

5. Verfahren nach Anspruch 4, bei dem der mindestens eine vorgegebene Schwellenwert (TH)
- abhängig von einer erwarteten Anzahl (N) von aktuellen Kanalinformationen, die von dem mindestens einen Endgerät (UE) in dem jeweiligen vorgegebenen Übertragtragungsbereich (RA) gesendet werden, und/oder
- abhängig von einer Wahrscheinlichkeit (P), dass aktuelle Kanalinformationen (CI) von gleichzeitig in demselben vorgegebenen Übertragungsbereich (RA) sendenden Endgeräten (UE) durch Kollision verloren gehen, vorgegeben wird.

6. Verfahren nach einem der Ansprüche 2 bis 5, bei dem die Unterteilung der für das Senden der aktuellen Kanalinformation (CI) vorgesehenen Ressource mindestens zwei Zeitschlitze und/oder mindestens zwei Frequenzbereiche und/oder mindestens zwei Übertragungskodes umfasst und jeweils mindestens ein Zeitschlitz und/oder mindestens ein Frequenzbereich und/oder mindestens ein Übertragungskode einen der mindestens zwei vorgegebenen Übertragungsbereiche (RA) bildet.

7. Verfahren nach einem der Ansprüche 2 bis 6, bei dem der mindestens eine aktuelle Wert (CQI) des Kanalqualitätsindikators für das Auswählen des Übertragungsbereichs (RA) unabhängig von der aktuellen Kanalqualität des mindestens einen Übertragungskanals der Basisstation (BS) zeitabhängig hin zu einer höheren Kanalqualität modifiziert wird.

8. Verfahren nach einem der vorstehenden Ansprüche, bei dem eine Anzahl der Sendungen der aktuellen Kanalinformation (CI) abhängig ist von dem mindestens einen aktuellen Wert (CQI) des Kanalqualitätsindikators und die Anzahl höher ist für einen Wert (CQI) des Kanalqualitätsindikators, der eine höhere Kanalqualität repräsentiert, als für einen Wert (CQI) des Kanalqualitätsindikators, der eine geringere Kanalqualität repräsentiert.

9. Verfahren nach einem der vorstehenden Ansprüche, bei dem der mindestens eine aktuelle Wert (CQI) des Kanalqualitätsindikators auf einen Broadcast oder einen Synchronisationskanal der Basisstation (BS) bezogen ermittelt wird.

10. Verfahren nach einem der vorstehenden Ansprüche, bei dem
- der jeweils mindestens eine aktuelle Wert (CQI) des Kanalqualitätsindikators abhängig von mindestens einem erfassten aktuellen Kanalqualitätsmesswert (CQV) ermittelt wird, der dem jeweils mindestens einen aktuellen Wert (CQI) des Kanalqualitätsindikators zeitlich zugeordnet ist, und
- der mindestens eine aktuelle Wert (CQI) des Kanalqualitätsindikators jeweils auf einen Mittelwert von Kanalqualitätsmesswerten (CQV) bezogen ermittelt wird, die zeitlich vorangegangen Werten (CQI) des Kanalqualitätsindikators zugeordnet sind.

11. Verfahren nach einem der vorstehenden Ansprüche, bei dem der mindestens eine aktuelle Wert (CQI) des Kanalqualitätsindikators abhängig von einem aktuellen Signal-zu-Interferenzplus-Rauschleistungsverhältnis des mindestens einen Übertragungskanals der Basisstation (BS) ermittelt wird.

12. Verfahren zum Betreiben einer Basisstation (BS) eines Mehrbenutzer-Funksystems, bei dem
- eine Ressource für ein Empfangen einer aktuellen Kanalinformation (CI) von einem Endgerät (UE) bereitgestellt wird,
- mindestens eine aktuelle Kanalinformation (CI) empfangen wird, die jeweils von einem Endgerät (UE) des Mehrbenutzer-Funksystems nach einem Verfahren gemäß einem der vorstehenden Ansprüche an die Basisstation (BS) gesendet wurde, und
- abhängig von der mindestens einen aktuellen Kanalinformation (CI) Ressourcen (R) mindestens eines Übertragungskanals der Basisstation (BS) dem mindestens einen Endgerät (UE) zugewiesen werden,
**dadurch gekennzeichnet, dass**
- eine für eine Übertragung der aktuellen Kanalinformation (CI) vorgesehene Ressource der Basisstation (BS) in mindestens zwei voneinander verschiedene vorgegebene Übertragungsbereiche (RA) unterteilt wird, die jeweils einem Wertebereich eines Kanalqualitätsindikators für den mindestens einen Übertragungskanal zugeordnet sind, wobei der Kanalqualitätsindikator für eine Kanalqualität des jeweiligen Übertragungskanals repräsentativ ist, und
- die mindestens eine aktuelle Kanalinformation (CI) über den der wenigstens zwei Übertragungsbereiche (RA) empfangen wird, der dem Wertebereich des Kanalqualitätsindikators zugeordnet ist, der einen von dem mindestens einen Endgerät (UE) ermittelten, aktuellen Wert (CQI) des Kanalqualitätsindikators umfasst.

13. Verfahren nach Anspruch 12, bei dem die mindestens zwei vorgegebenen Übertragungsbereiche (RA)
- abhängig von einer erwarteten Anzahl (N) von aktuellen Kanalinformationen, die von dem mindestens einen Endgerät (UE) in dem jeweiligen vorgegebenen Übertragtragungsbereich (RA) gesendet werden, und/oder
- abhängig von einer Wahrscheinlichkeit (P), dass aktuelle Kanalinformationen (CI) von gleichzeitig in demselben vorgegebenen Übertragungsbereich (RA) sendenden Endgeräten (UE) durch Kollision verloren gehen, vorgegeben werden.

14. Verfahren nach Anspruch 12 oder 13, bei dem
- ein Wertebereich des Kanalqualitätsindikators durch mindestens einen vorgegebenen Schwellenwert (TH) derart in Teilbereiche unterteilt ist, dass jedem vorgegebenen Übertragungsbereich (RA) jeweils ein Teilbereich zugeordnet ist, und
- der vorgegebene Übertragungsbereich (RA) ausgewählt wird abhängig von dem Teilbereich, in dem der mindestens eine aktuelle Wert (CQI) des Kanalqualitätsindikators aktuell liegt.

15. Verfahren nach Anspruch 14, bei dem der mindestens eine vorgegebene Schwellenwert (TH)
- abhängig von einer erwarteten Anzahl (N) von aktuellen Kanalinformationen, die von dem mindestens einen Endgerät (UE) in dem jeweiligen vorgegebenen Übertragtragungsbereich (RA) gesendet werden, und/oder
- abhängig von einer Wahrscheinlichkeit (P), dass aktuelle Kanalinformationen (CI) von gleichzeitig in demselben vorgegebenen Übertragungsbereich (RA) sendenden Endgeräten (UE) durch Kollision verloren gehen, vorgegeben wird.

16. Endgerät eines Mehrbenutzer-Funksystems, das ausgebildet ist
- zum Ermitteln jeweils eines aktuellen Werts (CQI) eines Kanalqualitätsindikators zu mindestens einem Übertragungskanal einer Basisstation (BS) des Mehrbenutzer-Funksystems, der repräsentativ ist für eine Kanalqualität des jeweiligen Übertragungskanals, und
- zum Senden einer aktuellen Kanalinformation (CI), die auf den mindestens einen Übertragungskanal der Basisstation (BS) bezogen ist, an die Basisstation (BS) durch ein Zufallszugriffsverfahren abhängig von dem mindestens einen aktuellen Wert (CQI) des Kanalqualitätsindikators,
**dadurch gekennzeichnet, dass**
das Endgerät ferner ausgebildet ist - zum Unterteilen einer für eine Übertragung der aktuellen Kanalinformation (CI) vorgesehene Ressource ist in mindestens zwei voneinander verschiedene vorgegebene Übertragungsbereiche (RA),
- zum Wählen abhängig von dem mindestens einen aktuellen Wert (CQI) des Kanalqualitätsindikators eines der mindestens zwei vorgegebenen Übertragungsbereiche (RA), und
- zum Senden der aktuellen Kanalinformation (CI) unter Nutzen des ausgewählten Übertragungsbereichs (RA) durch das Zufallszugriffsverfahren.

17. Basisstation eines Mehrbenutzer-Funksystems, die ausgebildet ist
- zum Bereitstellen einer Ressource für ein Empfangen einer aktuellen Kanalinformation (CI) von einem Endgerät (UE),
- zum Empfangen mindestens einer aktuellen Kanalinformation (CI), die jeweils von einem Endgerät (UE) des Mehrbenutzer-Funksystems nach Anspruch 13 an die Basisstation (BS) gesendet wurde, und
- zum Zuweisen von Ressourcen (R) mindestens eines Übertragungskanals der Basisstation (BS) zu dem mindestens einen Endgerät (UE) abhängig von der mindestens einen aktuellen Kanalinformation (CI),
**dadurch gekennzeichnet, dass**
die Basisstation ferner ausgebildet ist
- zum Unterteilen einer für eine Übertragung der aktuellen Kanalinformation (CI) vorgesehene Ressource der Basisstation (BS) in mindestens zwei voneinander verschiedene, vorgegebene Übertragungsbereiche (RA), die jeweils einem Wertebereich eines Kanalqualitätsindikators für den zumindest einen Übertragungskanal zugeordnet sind, wobei der Kanalqualitätsindikator für eine Kanalqualität des jeweiligen Übertragungskanals repräsentativ ist, und
- zum Empfangen der mindestens einen aktuellen Kanalinformation (CI) über den der wenigstens zwei Übertragungsbereiche (RA), der dem Wertebereich des Kanalqualitätsindikators zugeordnet ist, den einen von dem mindestens einen Endgerät (UE) ermittelten, aktuellen Wert (CQI) des Kanalqualitätsindikators umfasst.

18. Mehrbenutzer-Funksystem, das umfasst
- mindestens eine Basisstation (BS) nach Anspruch 17 und
- mindestens zwei Endgeräte (UE) nach Anspruch 16.

## Claims

1. Method for operating a terminal (UE) of a multi-user radio system, wherein
- in each case an instantaneous value (CQI) of a channel quality indicator for at least one transmission channel of a base station (BS) of the multi-user radio system is determined which is representative of a channel quality of the particular transmission channel, and
- instantaneous channel information item (CI) with regard to the at least one transmission channel of the base station (BS) is transmitted to the base station (BS) via a random access process as a function of the at least one instantaneous value (CQI) of the channel quality indicator,
**characterized in that**
- a resource that is provided for transmitting the instantaneous channel information item (CI) is subdivided into at least two specified transmission ranges (RA) which are different from one another,
- one of the at least two specified transmission ranges (RA) is selected as a function of the at least one instantaneous value (CQI) of the channel quality indicator, and
- the instantaneous channel information item (CI) is transmitted via the random access process, utilizing the selected transmission range (RA).

2. Method according to Claim 1, wherein the instantaneous channel information item (CI) includes the at least one instantaneous value (CQI) of the channel quality indicator, or the instantaneous channel information item (CI) is formed with regard to content as a function of the at least one instantaneous value (CQI) of the channel quality indicator.

3. Method according to Claim 1 or 2, wherein the at least two specified transmission ranges (RA)
- are transmitted by the at least one terminal (UE) in the particular specified transmission range (RA) as a function of an expected number (N) of instantaneous channel information items, and/or
- are specified as a function of a probability (P) that instantaneous channel information items (CI) of terminals (UE) simultaneously transmitting in the same specified transmission range (RA) are lost due to collision.

4. Method according to one of the preceding claims, wherein
- a value range of the channel quality indicator is subdivided into subranges by means of at least one predetermined threshold value (TH) in such a way that one subrange is associated with each specified transmission range (RA), and
- the specified transmission range (RA) is selected as a function of the subrange in which the at least one instantaneous value (CQI) of the channel quality indicator is instantaneously present.

5. Method according to Claim 4, wherein the at least one predetermined threshold value (TH) is specified
- as a function of an expected number (N) of instantaneous channel information items which are transmitted by the at least one terminal (UE) in the particular specified transmission range (RA), and/or
- as a function of a probability (P) that instantaneous channel information items (CI) of terminals (UE) simultaneously transmitting in the same specified transmission range (RA) are lost due to collision.

6. Method according to one of Claims 2 through 5, wherein the subdivision of the resource that is provided for transmitting the instantaneous channel information item includes at least two time slots and/or at least two frequency ranges and/or at least two transmission codes, and in each case at least one time slot and/or at least one frequency range and/or at least one transmission code forms one of the at least two specified transmission ranges (RA).

7. Method according to one of Claims 2 through 6, wherein the at least one instantaneous value (CQI) of the channel quality indicator is modified to a higher channel quality as a function of time for selecting the transmission range (RA), independent of the instantaneous channel quality of the at least one transmission channel of the base station (BS).

8. Method according to one of the preceding claims, wherein a number of the transmissions of the instantaneous information items (CI) is a function of the at least one instantaneous value (CQI) of the channel quality indicator, and the number is higher for a value (CQI) of the channel quality indicator that represents a higher channel quality than for a value (CQI) of the channel quality indicator that represents a lower channel quality.

9. Method according to one of the preceding claims, wherein the at least one instantaneous value (CQI) of the channel quality indicator is determined with regard to a broadcast or a synchronization channel of the base station (BS).

10. Method according to one of the preceding claims, wherein
- the at least one instantaneous value (CQI) of the channel quality indicator is determined in each case as a function of at least one detected instantaneous channel quality measured value (CQV) which is associated in each case with the at least one instantaneous value (CQI) of the channel quality indicator, and
- the at least one instantaneous value (CQI) of the channel quality indicator is determined in each case with regard to an average value of channel quality measured values (CQV) which are associated with temporally preceding values (CQI) of the channel quality indicator.

11. Method according to one of the preceding claims, wherein the at least one instantaneous value (CQI) of the channel quality indicator is determined as a function of an instantaneous signal-to-interference plus noise ratio of the at least one transmission channel of the base station (BS).

12. Method for operating a base station (BS) of a multi-user radio system, wherein
- a resource for receiving an instantaneous channel information item (CI) from a terminal (UE) is provided,
- at least one instantaneous channel information item (CI) is received which in each case has been transmitted to the base station (BS) by a terminal (UE) of the multi-user radio system, using a method according to one of the preceding claims, and
- resources (R) of at least one transmission channel of the base station (BS) are allocated to the at least one terminal (UE) as a function of the at least one instantaneous channel information item (CI), **characterized in that**
- a resource (R) of the base station (BS) that is provided for transmitting the instantaneous channel information item (CI) is subdivided into at least two specified transmission ranges (RA) which are different from one another, and which in each case are associated with a value range of a channel quality indicator for the at least one transmission channel, the channel quality indicator being representative of a channel quality of the particular transmission channel, and
- the at least one instantaneous channel information item (CI) is received via the transmission range (RA) of the at least two transmission ranges (RA) which is associated with the value range of the channel quality indicator, the value range including an instantaneous value (CQI) of the channel quality indicator which is determined by the at least one terminal (UE).

13. Method according to Claim 12, wherein the at least two specified transmission ranges (RA) are specified
- as a function of an expected number (N) of instantaneous channel information items which are transmitted by the at least one terminal (UE) in the particular specified transmission range (RA), and/or
- as a function of a probability (P) that instantaneous channel information items (CI) of terminals (UE) simultaneously transmitting in the same specified transmission range (RA) are lost due to collision.

14. Method according to Claim 12 or 13, wherein
- a value range of the channel quality indicator is subdivided into subranges by means of at least one predetermined threshold value (TH) in such a way that one subrange is associated with each specified transmission range (RA), and
- the specified transmission range (RA) is selected as a function of the subrange in which the at least one instantaneous value (CQI) of the channel quality indicator is instantaneously present.

15. Method according to Claim 14, wherein the at least one predetermined threshold value (TH) is specified
- as a function of an expected number (N) of instantaneous channel information items which are transmitted by the at least one terminal (UE) in the particular specified transmission range (RA), and/or
- as a function of a probability (P) that instantaneous channel information items (CI) of terminals (UE) simultaneously transmitting in the same specified transmission range (RA) are lost due to collision.

16. Terminal of a multi-user radio system which is designed
- for determining in each case an instantaneous value (CQI) of a channel quality indicator for at least one transmission channel of a base station (BS) of the multi-user radio system which is representative of a channel quality of the particular transmission channel, and
- for transmitting an instantaneous channel information item (CI) regarding the at least one transmission channel of the base station (BS) to the base station (BS) via a random access process as a function of the at least one instantaneous value (CQI) of the channel quality indicator, **characterized in that**
the terminal is also designed
- for subdividing a resource that is provided for transmitting the instantaneous channel information item (CI) into at least two specified transmission ranges (RA) which are different from one another,
- for selecting one of the at least two specified transmission ranges (RA) as a function of the at least one instantaneous value (CQI) of the channel quality indicator, and
- for transmitting the instantaneous channel information item (CI) via the random access process, utilizing the selected transmission range (RA).

17. Base station of a multi-user radio system which is designed
- for providing a resource for receiving an instantaneous channel information item (CI) from a terminal (UE),
- for receiving at least one instantaneous channel information item (CI) which in each case has been transmitted by a terminal (UE) of the multi-user radio system to the base station (BS) according to claim 13,
- for allocating resources (R) of at least one transmission channel of the base station (BS) to the at least one terminal (UE) as a function of the at least one instantaneous channel information item (CI), **characterized in that**
the base station is also designed
- for subdividing a resource that is provided for transmitting the instantaneous channel information item (CI) into at least two specified transmission ranges (RA) which are different from one another, and which in each case are associated with a value range of a channel quality indicator for the at least one transmission channel, the channel quality indicator being representative of a channel quality of the particular transmission channel, and
- for receiving the at least one instantaneous channel information item (CI) via the transmission range (RA) of the at least two transmission ranges (RA) which is associated with the value range of the channel quality indicator, the value range including an instantaneous value (CQI) of the channel quality indicator which is determined by the at least one terminal (UE).

18. Multi-user radio system, including
- at least one base station (BS) according to claim 17 and
- at least two terminals (UE) according to claim 16.

## Revendications

1. Procédé de fonctionnement d'un terminal (UE) d'un système radio à utilisateurs multiples, dans lequel :
- une valeur actuelle (CQI) d'un indicateur de qualité de canal est déterminée respectivement pour au moins un canal de transmission d'une station de base (BS) du système radio à utilisateurs multiples, qui est représentative pour une qualité de canal du canal de transmission respectif ; et
- une information de canal actuelle (CI) se rapportant à l'au moins un canal de transmission de la station de base (BS), en fonction de la au moins une valeur actuelle (CQI) de l'indicateur de qualité de canal, est envoyée à la station de base (BS) par un procédé d'accès aléatoire ;
**caractérisé par le fait que** :
- une ressource prévue pour une transmission de l'information de canal actuelle (CI) est subdivisée en au moins deux plages de transmission prédéterminées (RA) qui diffèrent l'une de l'autre ;
- l'une des au moins deux plages de transmission prédéterminées (RA) est sélectionnée en fonction de la au moins une valeur actuelle (CQI) de l'indicateur de qualité de canal ; et
- l'information de canal actuelle (CI) est envoyée en utilisant la plage de transmission (RA) sélectionnée, par le procédé d'accès aléatoire.

2. Procédé selon la revendication 1, dans lequel l'information de canal actuelle (CI) comprend la au moins une valeur actuelle (CQI) de l'indicateur de qualité de canal ou l'information de canal actuelle (CI) est formée en ce qui concerne le contenu en fonction de la au moins une valeur actuelle (CQI) de l'indicateur de qualité de canal.

3. Procédé selon l'une des revendications 1 ou 2, dans lequel les au moins deux plages de transmission prédéterminées (RA) sont prédéterminées :
- en fonction d'un nombre (N) attendu d'informations de canal actuelles qui sont envoyées par le au moins un terminal (UE) dans la plage de transmission prédéterminée respective (RA) ; et/ou
- en fonction d'une probabilité (P) que des informations de canal actuelles (CI) de terminaux (UE) émettant simultanément dans la même plage de transmission prédéterminée (RA) soient perdues par collision.

4. Procédé selon l'une des revendications précédentes, dans lequel :
- une plage de valeurs de l'indicateur de qualité de canal est subdivisée par au moins une valeur de seuil prédéterminée (TH) en plages partielles de telle sorte que chaque plage partielle est associée à une plage de transmission prédéterminée respective (RA) ; et
- la plage de transmission prédéterminée (RA) est sélectionnée en fonction de la plage partielle dans laquelle se situe actuellement la au moins une valeur actuelle (CQI) de l'indicateur de qualité de canal.

5. Procédé selon la revendication 4, dans lequel la au moins une valeur de seuil prédéterminée (TH) est prédéterminée :
- en fonction d'un nombre (N) attendu d'informations de canal actuelles qui sont envoyées par l'au moins un terminal (UE) dans la plage de transmission prédéterminée respective (RA) ; et/ou
- en fonction d'une probabilité (P) que des informations de canal actuelles (CI) de terminaux (UE) émettant simultanément dans la même plage de transmission prédéterminée (RA) soient perdues par collision.

6. Procédé selon l'une des revendications 2 à 5, dans lequel la subdivision de la ressource prévue pour l'envoi de l'information de canal actuelle (CI) comprend au moins deux créneaux temporels et/ou au moins deux plages de fréquences et/ou au moins deux codes de transmission et dans lequel au moins un créneau temporel et/ou au moins une plage de fréquences et/ou au moins un code de transmission forme respectivement l'une des au moins deux plages de transmission prédéterminées (RA).

7. Procédé selon l'une des revendications 2 à 6, dans lequel la au moins une valeur actuelle (CQI) de l'indicateur de qualité de canal pour la sélection de la plage de transmission (RA) indépendamment de la qualité de canal actuelle du au moins un canal de transmission de la station de base (BS) est modifiée en fonction du temps vers une qualité du canal supérieure.

8. Procédé selon l'une des revendications précédentes, dans lequel un nombre des émissions d'informations de canal actuelles (CI) est dépendant de la au moins une valeur actuelle (CQI) de l'indicateur de qualité de canal et le nombre est plus élevé pour une valeur (CQI) de l'indicateur de qualité de canal qui représente une qualité de canal supérieure que pour une valeur (CQI) de l'indicateur de qualité de canal qui représente une qualité de canal plus faible.

9. Procédé selon l'une des revendications précédentes, dans lequel la au moins une valeur actuelle (CQI) de l'indicateur de qualité de canal est déterminée par référence à une diffusion générale ou à un canal de synchronisation de la station de base (BS).

10. Procédé selon l'une des revendications précédentes, dans lequel :
- la au moins une valeur actuelle (CQI) de l'indicateur de qualité de canal est chaque fois déterminée en fonction d'au moins une valeur actuelle de mesure de qualité de canal saisie (CQV) qui est associée dans le temps à la au moins une valeur actuelle (CQI) respective de l'indicateur de qualité de canal ; et
- la au moins une valeur actuelle (CQI) de l'indicateur de qualité de canal est déterminée à chaque fois par rapport à une valeur moyenne de valeurs de mesure de la qualité du canal (CQV) qui sont associées à des valeurs temporellement antérieures (CQI) de l'indicateur de qualité de canal.

11. Procédé selon l'une des revendications précédentes, dans lequel la au moins une valeur actuelle (CQI) de l'indicateur de qualité de canal est déterminée en fonction d'un rapport actuel de puissance de signal sur interférence plus bruit du au moins un canal de transmission de la station de base (BS).

12. Procédé de fonctionnement d'une station de base (BS) d'un système radio à utilisateurs multiples, dans lequel :
- une ressource est fournie pour une réception d'une information de canal actuelle (CI) d'un terminal (UE) ;
- au moins une information de canal actuelle (CI) est reçue, qui a été envoyée à chaque fois à la station de base (BS) d'un terminal (UE) du système radio à utilisateurs multiples à l'aide d'un procédé selon l'une des revendications précédentes ; et
- en fonction de la au moins une information de canal actuelle (CI), des ressources (R) d'au moins un canal de transmission de la station de base (BS) sont attribuées à l'au moins un terminal (UE) ;
**caractérisé par le fait que** :
- une ressource de la station de base (BS) prévue pour une transmission de l'information de canal actuelle (CI) est subdivisée en au moins deux plages de transmission prédéterminées (RA) qui diffèrent l'une de l'autre, chacune étant associée à une plage de valeurs d'un indicateur de qualité de canal pour l'au moins un canal de transmission, l'indicateur de qualité de canal étant représentatif pour une qualité de canal du canal de transmission respectif ; et
- la au moins une information de canal actuelle (CI) est reçue sur celle des au moins deux plages de transmission (RA) qui est associée à la plage de valeurs de l'indicateur de qualité de canal qui comprend une valeur actuelle (CQI) de l'indicateur de qualité de canal qui a été déterminée par le au moins un terminal (UE).

13. Procédé selon la revendication 12, dans lequel les au moins deux plages de transmission prédéterminées (RA) sont prédéterminées :
- en fonction d'un nombre (N) attendu d'informations de canal actuelles qui sont envoyées par ledit au moins un terminal (UE) dans la plage de transmission prédéterminée respective (RA) ; et/ou
- en fonction d'une probabilité (P) que des informations de canal actuelles (CI) de terminaux (UE) émettant simultanément dans la même plage de transmission prédéterminée (RA) soient perdues par collision.

14. Procédé selon l'une des revendications 12 ou 13, dans lequel :
- une plage de valeurs de l'indicateur de qualité de canal est subdivisée par au moins une valeur de seuil prédéterminée (TH) en plages partielles de telle sorte que chaque plage partielle est associée à une plage de transmission prédéterminée respective (RA); et
- la plage de transmission prédéterminée (RA) est sélectionnée en fonction de la plage partielle dans laquelle se situe actuellement l'au moins une valeur actuelle (CQI) de l'indicateur de qualité de canal.

15. Procédé selon la revendication 4, dans lequel l'au moins une valeur de seuil prédéterminée (TH) est prédéterminée :
- en fonction d'un nombre (N) attendu d'informations de canal actuelles qui sont envoyées par l'au moins un terminal (UE) dans la plage de transmission prédéterminée respective (RA) ; et/ou
- en fonction d'une probabilité (P) que des informations de canal actuelles (CI) de terminaux (UE) émettant simultanément dans la même plage de transmission prédéterminée (RA) soient perdues par collision.

16. Terminal d'un système radio à utilisateurs multiples qui est conçu pour :
- déterminer à chaque fois une valeur actuelle (CQI) d'un indicateur de qualité de canal pour au moins un canal de transmission d'une station de base (BS) du système radio à utilisateurs multiples, qui est représentative pour une qualité de canal du canal de transmission respectif ; et
- envoyer à la station de base (BS) par un procédé d'accès aléatoire une information de canal actuelle (CI) qui se rapporte à l'au moins un canal de transmission de la station de base (BS), en fonction de la au moins une valeur actuelle (CQI) de l'indicateur de qualité de canal ;
**caractérisé par le fait que** le terminal est en outre conçu pour :
- subdiviser une ressource prévue pour une transmission de l'information de canal actuelle (CI) en au moins deux plages de transmission prédéterminées (RA) qui diffèrent l'une de l'autre ;
- sélectionner l'une des au moins deux plages de transmission prédéterminées (RA) en fonction de l'au moins une valeur actuelle (CQI) de l'indicateur de qualité de canal ; et
- envoyer l'information de canal actuelle (CI) en utilisant la plage de transmission (RA) sélectionnée par le procédé d'accès aléatoire.

17. Station de base d'un système radio à utilisateurs multiples qui est conçue pour :
- fournir une ressource pour une réception d'une information de canal actuelle (CI) d'un terminal (UE) ;
- recevoir au moins une information de canal actuelle (CI) qui a été envoyée à chaque fois à la station de base (BS) par un terminal (UE) du système radio à utilisateurs multiples selon la revendication 13 ; et
- en fonction de la au moins une information de canal actuelle (CI), attribuer des ressources (R) d'au moins un canal de transmission de la station de base (BS) à l'au moins un terminal (UE) ;
**caractérisé par le fait que** la station de base est en outre conçue pour :
- subdiviser une ressource de la station de base (BS) prévue pour une transmission de l'information de canal actuelle (CI) en au moins deux plages de transmission prédéterminées (RA) qui diffèrent l'une de l'autre, chacune étant associée à une plage de valeurs d'un indicateur de qualité de canal pour l'au moins un canal de transmission, l'indicateur de qualité de canal étant représentatif pour une qualité de canal du canal de transmission respectif ; et
- recevoir la au moins une information de canal actuelle (CI) sur celle des au moins deux plages de transmission (RA) qui est associée à la plage de valeurs de l'indicateur de qualité de canal qui comprend une valeur actuelle (CQI) de l'indicateur de qualité de canal qui a été déterminée par l'au moins un terminal (UE).

18. Système radio à utilisateurs multiples comprenant :
- au moins une station de base (BS) selon la revendication 17 ; et
- au moins deux terminaux (UE) selon la revendication 16.
